# EUROPÄISCHE PATENTSCHRIFT

(11) **EP 3 470 743 B1**
(45) Veröffentlichungstag und Bekanntmachung des Hinweises auf die Patenterteilung: **19.07.2023**
(21) Anmeldenummer: 18020565.0
(22) Anmeldetag: 10.08.2016
(51) Int. Cl.: F28F 9/02, F28D 1/053, F24T 10/10

(54) **WÄRMEÜBERTRAGUNGSELEMENT**
HEAT TRANSFER ELEMENT
ÉLEMENT DE TRANSFERT THERMIQUE

(30) Priorität: 10.08.2015 DE 102015010394
(43) Veröffentlichungstag der Anmeldung: 17.04.2019
(62) Teilanmeldung aus: 16400036.6
(73) Patentinhaber: Mefa Befestigungs- und Montagesysteme GmbH, 74635 Kupferzell (DE)
(72) Erfinder: Schneider, Martin, 74635 Kupferzell (DE)
(74) Vertreter: Patentanwälte Schuster, Müller & Partner mbB

(56) Entgegenhaltungen:
- EP-A1- 0 676 593
- EP-A1- 2 738 504
- EP-A2- 2 985 546
- WO-A1-98/05905
- DE-A1- 4 434 386
- DE-A1- 19 720 863
- DE-U1-202005 000 017
- JP-U- S5 954 011

## Beschreibung

### Stand der Technik

Die Erfindung geht aus von einem Wärmeübertragungselement, nach der Gattung des Anspruchs 1.

Wärmeübertragungselemente zur Energiegewinnung, wie beispielsweise flächige flexible Absorbermatten oder dgl. bzw. Energiespeicher, sind seit langem Stand der Technik. Diese dienen hauptsächlich als Energiequelle einer Wärmepumpe. Dabei spielt die Anschlusstechnik eine wichtige Rolle.

In der Druckschrift DE 34 18 561 A1 wird ein Wärmeübertragungselement beschrieben, welches für das Versenken im Erdreich vorgesehen ist. Dieses Wärmeübertragungselement besteht aus einer Absorbermatte, die zwischen einem Verteiler und einem Sammler angeordnet ist. Nachteilig ist an dieser Lösung, dass man zum Anschließen des Verteilers und/oder Sammlers relativ lange Leitungen benötigt werden.

Die Druckschrift DE 31 01 039 A1 offenbart ein Wärmeübertragungselement, bei welchem die Absorbermatte spiralförmig aufgewickelt ist, wobei der Verteiler bzw. der Sammler samt der jeweiligen Anschlüsse in der Mitte bzw. außen an der spiralförmig aufgewickelten Absorbermatte angeordnet ist. Auch bei dieser Lösung werden für das Anschließen des Verteilers und Sammlers relativ lange Leitungen benötigt.

Um diesen Nachteil zu beseitigen wird in der Druckschrift DE 20 2005 000 017 U1 eine Einrichtung zur Strömungsverbindung von zueinander parallelen Strömungskanälen einer Wärmetauschmatte, die alternierend an ein Vorlaufrohr und ein Rücklaufrohr anschließbar sind, offenbart, wobei das Vorlaufrohr und das Rücklaufrohr entlang derselben Mattenseite verlaufen, wobei sich die Einrichtung durch einen an der gegenüberliegenden Mattenseite anbringbaren Hohlkörper auszeichnet, der Anschlüsse für mindestens drei Strömungskanäle der Wärmetauschmatte aufweist. Nachteilig ist hierbei der bauliche Aufwand.

Daher ist es Aufgabe der Erfindung, ein Wärmeübertragungselement zur Verfügung zu stellen, bei dem die Anschlusstechnik optimiert wird.

### Die Erfindung und ihre Vorteile

Das erfindungsgemäße Wärmeübertragungselement, mit den kennzeichnenden Merkmalen des Anspruchs 1, hat demgegenüber den Vorteil, dass mindestens ein Verteiler und mindestens ein Sammler an derselben Stirnseite der flexiblen Matte angeordnet sind und mindestens eine Längsseite an einem Verteiler in einem spitzen Winkel zu mindestens einer Längsachse mindestens eines Verteilers und/oder einem stumpfen Winkel zu mindestens einer Längsachse mindestens eines Verteilers angeordnet ist und/oder wobei mindestens ein Verteiler und mindestens ein Sammler an derselben Stirnseite der flexiblen Matte angeordnet sind und mindestens eine Längsseite an einem Sammler in einem spitzen Winkel zu mindestens einer Längsachse mindestens eines Sammlers und/oder in einem stumpfen Winkel zu mindestens einer Längsachse mindestens eines Sammlers angeordnet ist. Somit sind auch die Anschlüsse für Sammler und Verteiler räumlich in unmittelbarer Nähe, so dass lange Leitungen zu den Anschlüssen von Sammler und Verteiler reduziert werden und dadurch die Anschlusstechnik optimiert wird.

Nach einer vorteilhaften Ausgestaltung des erfindungsgemäßen Wärmeübertragungselements sind mindestens ein Verteiler und mindestens ein Sammler zumindest teilweise axial ineinander angeordnet.

Nach einer zusätzlichen vorteilhaften Ausgestaltung des erfindungsgemäßen Wärmeübertragungselements sind mindestens ein Verteiler und mindestens ein Sammler zumindest teilweise axial fluchtend zueinander und/oder zumindest teilweise parallel zueinander angeordnet.

Nach einer zusätzlichen vorteilhaften Ausgestaltung des erfindungsgemäßen Wärmeübertragungselements weist die flexible Matte mindestens zwei Stirnseiten auf, wobei mindestens eine Stirnseite einen Versatz in Richtung der Breite der flexiblen Matte des Wärmeübertragungselements zu mindestens einer anderen Stirnseite aufweist. So ist beispielsweise eine schraubenförmige Anordnung des Wärmeübertragungselements, die senkrecht im Erdreich installiert wird, denkbar, bei der der auf die Erdoberfläche projizierte Flächenbedarf sehr gering ist und der Wärmetransfer aufgrund der durch eine solche Anordnung vergrößerten Wärmeübertragungsfläche optimiert wird. Eine spiralförmige Anordnung, bei welcher mindestens eine Längsseite innerhalb einer Ebene oder zumindest teilweise außerhalb einer Ebene angeordnet ist ebenso denkbar, wie eine Kombination dieser Anordnungen.

Nach einer zusätzlichen vorteilhaften Ausgestaltung des erfindungsgemäßen Wärmeübertragungselements ist die flexible Matte zumindest teilweise in mindestens zwei Elemente getrennt, wodurch die durch die Trennung gebildeten Stirnseiten der Elemente die Stirnseite der flexiblen Matte, an der mindestens ein Sammler und mindestens ein Verteiler angeordnet sind, bilden. Somit ist der räumliche Abstand von Sammler und Verteiler und damit der gegenseitige Wärmeaustausch zwischen Sammler und Verteiler bzw. den jeweiligen Zuleitungen einstellbar.

Nach einer zusätzlichen vorteilhaften Ausgestaltung des erfindungsgemäßen Wärmeübertragungselements sind mindestens ein Verteiler und mindestens ein Sammler, mindestens zwei Verteiler und/oder mindestens zwei Sammler aus einem Bauteil. Dadurch wird die Handhabung des Wärmeübertragungselements erleichtert und der Installations- und Wartungsaufwand reduziert.

Nach einer zusätzlichen vorteilhaften Ausgestaltung des erfindungsgemäßen Wärmeübertragungselements ist an mindestens einem Verteiler und/oder an mindestens einem Sammler mindestens eine Haltevorrichtung angeordnet. Die Haltevorrichtung kann beispielsweise in Form von Ösen, Nasen, Stiften, Hacken und/oder Ähnlichem ausgestaltet sein, so dass Installationshilfsmittel wie beispielsweise Seile, Bänder und/oder Ketten an den Haltevorrichtungen angebracht werden können. Dadurch wird der Installationsaufwand des erfindungsgemäßen Wärmeübertragungselements reduziert.

Nach einer zusätzlichen vorteilhaften Ausgestaltung des erfindungsgemäßen Wärmeübertragungselements besteht das Wärmeübertragungselement zumindest teilweise aus einem druckbeständigen Material. Durch die Möglichkeit der Lastaufnahme bei stärkeren Druckbelastungen kann eine Beschädigung des Wärmeübertragungselements, hier insbesondere der flexiblen Matte des Wärmeübertragungselements, verhindert werden.

Nach einer zusätzlichen vorteilhaften Ausgestaltung des erfindungsgemäßen Wärmeübertragungselements ist mindestens ein Verteiler und/oder mindestens ein Sammler zumindest teilweise aus einem flexiblen Material. Die zumindest teilweise Flexibilität der Anschlusselemente des Wärmeübertragungselements für den Vor- und Rücklauf bietet den Vorteil, dass die Anschlusselemente sich ihrer Umgebung in einem gewissen Grad anpassen können und somit zum einen eine Installation, beispielsweise in das Erdreich, erleichtert und zum anderen eine Beschädigung der Anschlusselemente verhindert wird.

Nach einer zusätzlichen vorteilhaften Ausgestaltung des erfindungsgemäßen Wärmeübertragungselements ist das Wärmeübertragungselement zumindest teilweise aus Kunststoff. Die Ausführung des Wärmeübertragungselements in Kunststoff hat den Vorteil, dass so nahezu beliebige Formen hergestellt werden können, wodurch die Wärmeübertragung optimiert wird. Zudem sinken die Herstellungskosten, weil viele Einzelteile des erfindungsgemäßen Wärmeübertragungselements einfach und schnell durch Extrusion hergestellt werden können.

Nach einer zusätzlichen vorteilhaften Ausgestaltung des erfindungsgemäßen Wärmeübertragungselements ist die flexible Matte zumindest teilweise aus Kunststoff. Hierbei ist vorteilhaft, dass durch den Einsatz von Kunststoff in der Produktion des flexiblen Elements die Wandstärken bei dennoch hoher Stabilität sehr klein ausgestaltet werden können. So wird die Umgebungsenergie aufgrund der geringen Wandstärken optimal genutzt.

Nach einer zusätzlichen vorteilhaften Ausgestaltung des erfindungsgemäßen Wärmeübertragungselements ist die flexible Matte aus nebeneinander angeordneten Rohren gefertigt. Jedes einzelne Rohr könnte damit einen Strömungskanal darstellen. Es ist ebenso denkbar, dass mehrere Strömungskanäle innerhalb eines Rohres angeordnet sind.

Nach einer zusätzlichen vorteilhaften Ausgestaltung des erfindungsgemäßen Wärmeübertragungselements ist mindestens ein Strömungskanal der flexiblen Matte eine Kapillare.

Nach einer zusätzlichen vorteilhaften Ausgestaltung des erfindungsgemäßen Wärmeübertragungselements ist mindestens eine Längsseite an einem Verteiler in einem spitzen Winkel, einem rechten Winkel und/oder einem stumpfen Winkel angeordnet und/oder mindestens eine Längsseite an einem Sammler in einem spitzen Winkel, einem rechten Winkel und/oder einem stumpfen Winkel angeordnet. Das Variieren des Winkels erlaubt eine spannungsfreie Installation des Sammlers, des Verteilers und/oder der flexiblem Matte bei unterschiedlichen Positionen und verschiedenen Anordnungen.

Das erfindungsgemäße Wärmeübertragungselement, hat den Vorteil, dass mindestens eine Längsseite an einem Verteiler in einem spitzen Winkel und/oder einem stumpfen Winkel angeordnet ist und/oder mindestens eine Längsseite an einem Sammler in einem spitzen Winkel und/oder einem stumpfen Winkel angeordnet ist, wobei mindestens ein Verteiler und mindestens ein Sammer an derselben Stirnseite der flexiblen Matte angeordnet sind und mindestens eine Längsseite an einem Verteiler in einem spitzen Winkel zu mindestens einer Längsachse mindestens eines Verteilers und/oder einem stumpfen Winkel zu mindestens einer Längsachse mindestens eines Verteilers angeordnet ist und/oder mindestens ein Verteiler und mindestens ein Sammler an derselben Stirnseite der flexiblen Matte angeordnet sind und mindestens eine Längsseite an einem Sammler in einem spitzen Winkel zu mindestens einer Längsachse mindestens eines Sammlers und/oder in einem stumpfen Winkel zu mindestens einer Längsachse mindestens eines Sammlers angeordnet ist. Durch das Variieren des Winkels kann beispielsweise eine rechteckige flexible Matte an die Installationsposition des Sammlers und/oder des Verteilers angepasst werden. Dadurch werden Spannungen im Material des Wärmeübertragungselements vermieden und somit dessen Lebensdauer erhöht.

Weitere Vorteile und vorteilhafte Ausgestaltung der Erfindung sind der nachfolgenden Beschreibung, den Ansprüchen und den Zeichnungen entnehmbar.

### Zeichnung

Bevorzugte Ausführungsbeispiele des erfindungsgemäßen Gegenstands sind in der Zeichnung dargestellt und werden im Folgenden näher erläutert. Es zeigen:
- Fig. 1: eine Seitenansicht eines nicht unter den Schutzumfang fallendes Wärmeübertragungselements,
- Fig. 2: eine perspektivische Ansicht eines Ausschnittes des Wärmeübertragungselements, gemäß Fig. 1,
- Fig. 3: eine Seitenansicht eines Ausschnittes des Wärmeübertragungselements, gemäß Fig. 1,
- Fig. 4: eine Schnittansicht auf einen Ausschnitt des Wärmeübertragungselements, gemäß Fig. 1,
- Fig. 5: eine perspektivische Schnittansicht eines Ausschnittes eines nicht unter den Schutzumfang fallendes Wärmeübertragungselements,
- Fig. 6: eine perspektivische Ansicht auf einen Ausschnitt einer flexiblen Matte eines Wärmeübertragungselements, gemäß Fig. 5,
- Fig. 7: eine Schnittansicht einer flexiblen Matte eines Wärmeübertragungselements, gemäß Fig. 5,
- Fig. 8: eine Seitenansicht eines weiteren Ausführungsbeispiels eines nicht unter den Schutzumfang fallendes Wärmeübertragungselements,
- Fig. 9: eine perspektivische Ansicht eines Ausschnittes des Wärmeübertragungselements, gemäß Fig. 8,
- Fig. 10: eine Seitenansicht eines Ausschnittes des Wärmeübertragungselements, gemäß Fig. 8,
- Fig. 11: eine Schnittansicht auf einen Ausschnitt des Wärmeübertragungselements, gemäß Fig. 8,
- Fig. 12: eine Seitenansicht eines weiteren Ausführungsbeispiels eines nicht unter den Schutzumfang fallendes Wärmeübertragungselements,
- Fig. 13: eine perspektivische Ansicht eines Ausschnittes des Wärmeübertragungselements, gemäß Fig. 12,
- Fig. 14: eine Seitenansicht eines Ausschnittes des Wärmeübertragungselements, gemäß Fig. 12,
- Fig. 15: eine Schnittansicht auf einen Ausschnitt des Wärmeübertragungselements, gemäß Fig. 12,
- Fig. 16: eine perspektivische Ansicht eines Ausschnittes eines weiteren Ausführungsbeispiels eines nicht unter den Schutzumfang fallendes Wärmeübertragungselements,
- Fig. 17: eine Seitenansicht eines Ausschnittes des Wärmeübertragungselements, gemäß Fig. 16,
- Fig. 18: eine perspektivische Ansicht auf ein weiteres Ausführungsbeispiel eines Wärmeübertragungselements,
- Fig. 19: eine Seitenansicht eines erfindungsgemäßen Wärmeübertragungselements und
- Fig. 20: eine Seitenansicht eines weiteren Ausführungsbeispiels eines erfindungsgemäßen Wärmeübertragungselements.

### Beschreibung der Ausführungsbeispiele

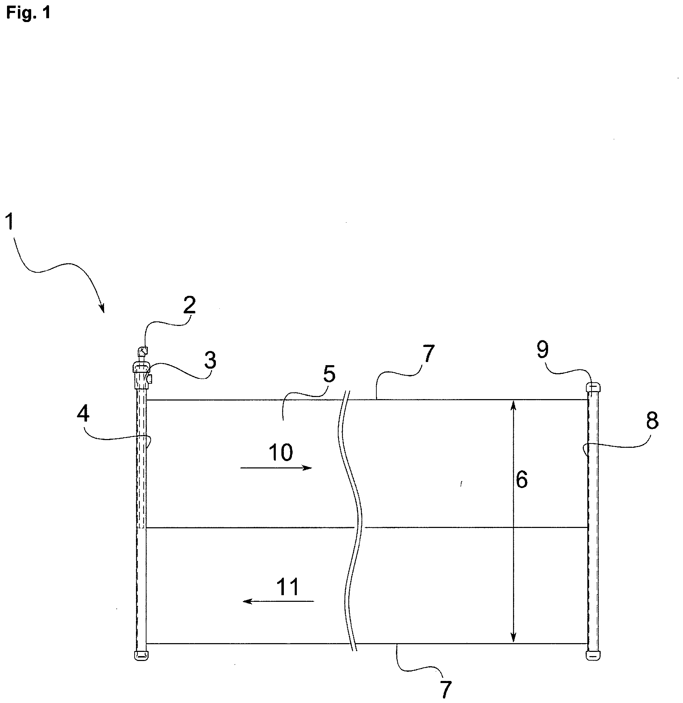

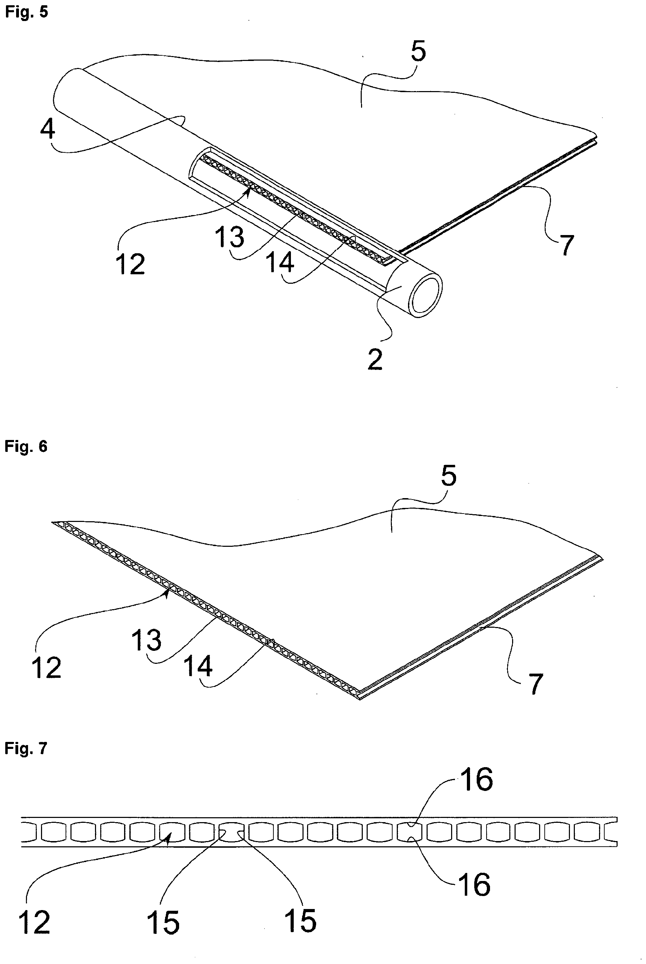

Fig.1 zeigt eine Seitenansicht eines nicht unter den Schutzumfang fallendes Wärmeübertragungselements 1 mit einem Verteiler 2 und einem Sammler 3, die an einer Stirnseite 4 der flexiblen Matte 5 angeordnet sind. Die flexible Matte 5 weist eine Breite 6 und zwei Längsseiten 7 auf. An einer der Stirnseite 4 gegenüberliegenden Stirnseite 8 der flexiblen Matte 5 ist ein geschlossenes Verbindungselement 9 angeordnet, welches die in Fig. 6 dargestellten Strömungskanäle 12 miteinander verbindet. In diesem Ausführungsbeispiel strömt das Wärmeträgermedium in den Verteiler 2 ein und wird von diesem auf die in Fig. 6 dargestellten Strömungskanäle 12 verteilt, dabei ist die Strömungsrichtung durch den Pfeil 10 gekennzeichnet. An der Stirnseite 8 gelangt das Wärmeträgermedium in das geschlossene Verbindungselement 9, welches das Wärmeträgermedium auf die in Fig. 6 dargestellten Strömungskanäle 12 verteilt, durch welche das Wärmeträgermedium in die durch den Pfeil 11 gekennzeichnete Richtung strömt. Somit strömt das Wärmeträgermedium in den Sammler 3 und wird aus dem Wärmeübertragungselement hinausgeleitet.

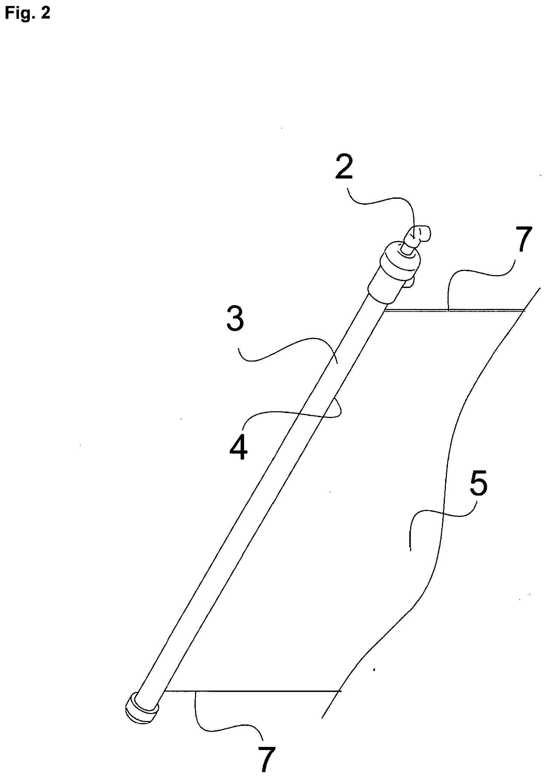

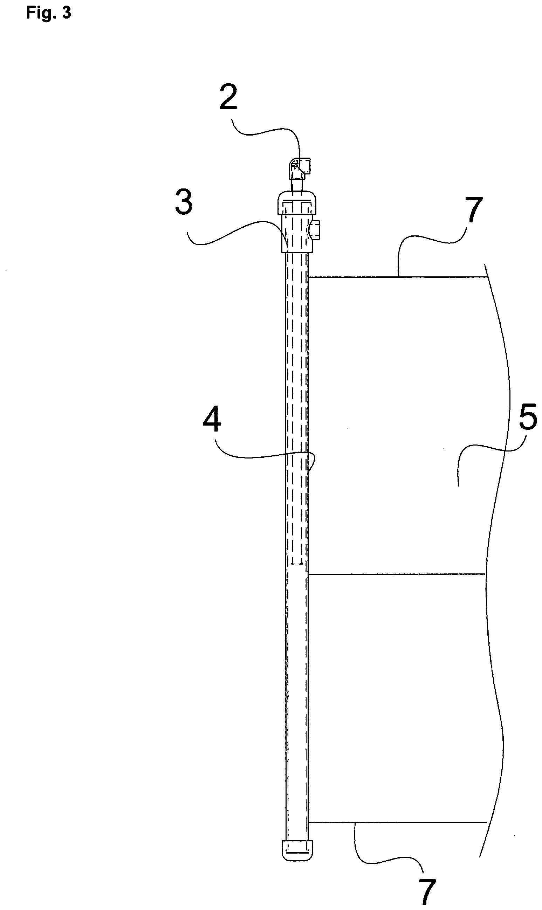

Fig. 2 und Fig. 3 zeigen eine perspektivische Ansicht und eine Seitenansicht eines Ausschnittes des Wärmeübertragungselements, gemäß Fig. 1.

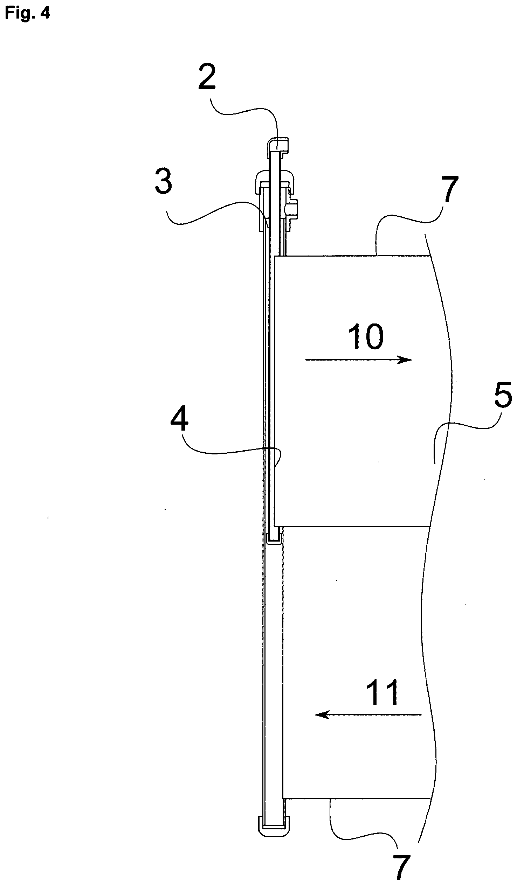

Fig. 4 zeigt eine Schnittansicht auf einen Ausschnitt des Wärmeübertragungselements 1, gemäß Fig. 1. In diesem Ausführungsbeispiel sind der Verteiler 2 und der Sammler 3 in axial ineinander angeordneter Bauweise als ein Bauteil ausgeführt. Das Wärmeträgermedium strömt in den Verteiler 2 und von dort in die in Fig. 6 dargestellten Strömungskanäle 12, die innerhalb des oberen Teils der flexiblen Matte 5 angeordnet sind. Die Strömungsrichtung des Wärmemediums ist mit dem Pfeil 10 gekennzeichnet. Der Rücklauf des Wärmeträgermediums geschieht über das in Fig. 1 dargestellte Verbindungselement 9, welches das Wärmeträgermedium auf die in Fig. 6 dargestellten Strömungskanäle 12, die innerhalb des unteren Teils der flexiblen Matte 5 angeordnet sind, in die mit dem Pfeil 11 gekennzeichnete Richtung verteilt. Das Wärmeträgermedium strömt dann in den Sammler 3, von wo aus es aus dem Wärmeübertragungselement 1 hinausgeleitet wird.

Fig. 5 zeigt eine perspektivische Schnittansicht eines Ausschnittes eines nicht unter den Schutzumfang fallendes Wärmeübertragungselements 1. Es ist die Anbindung zwischen dem Verteiler 2, und der flexiblen Matte 5 bzw. der darin verlaufenden Strömungskanäle 12 dargestellt. Das Wärmeträgermedium strömt in den Verteiler 2 und von hier in die Strömungskanäle 12. Der Rücklauf des Wärmeträgermediums erfolgt über eine analoge Anbindung des Sammlers 3 (Fig. 4) bzw. des Verbindungselements 9 (Fig. 1). In diesem Ausführungsbeispiel verlaufen alle Strömungskanäle 12 parallel zu der Längsseite 7 der flexiblen Matte 5. Die Strömungskanäle 12 weisen eine innere Wandung 13, die in Kontakt mit dem Wärmeträgermedium steht, und eine äußere Wandung 14 auf. In diesem Ausführungsbeispiel bildet die äußere Wandung 14 der Strömungskanäle 12 die Oberfläche der flexiblen Matte 5, die in Kontakt mit der Umgebung steht. Dies kann beispielsweise, bei einer Installation des Wärmeübertragungselements 1 im Erdreich, die das Wärmeübertragungselement 1 umgebende Erde sein. Die flexible Matte 5 ist bevorzugt einteilig und bevorzugt aus Kunststoff gefertigt, zum Beispiel durch Extrusion, wobei die Wandstärke der inneren Wandung 10 und der äußeren Wandung 11 dünn ausgeführt sind, so dass ein verbesserter Wärmeüber- und -durchgang zur Umgebung erzielt wird, wodurch die Restwärme zum Beispiel des Erdreichs optimal genutzt werden kann.

Fig. 6 zeigt eine perspektivische Ansicht auf einen Ausschnitt einer flexiblen Matte 5 eines Wärmeübertragungselements 1, gemäß Fig. 5.

Fig.7 zeigt eine Schnittansicht einer flexiblen Matte 5 eines Wärmeübertragungselements 1, gemäß Fig. 5. Der Querschnitt der Strömungskanäle 12 wird durch zwei parallele Wandungen 15 und zwei gekrümmte Wandungen 16 geformt, so dass der Querschnitt eines auf zwei Seiten abgerundeten Rechtecks annimmt. Selbstverständlich kann die Form des Querschnittes durch Variation der jeweiligen Wandungen eingestellt werden. Es ist ebenso denkbar, dass die Strömungskanäle 12 nicht nur nebeneinander, sondern zusätzlich auch übereinander, chaotisch verteilt und/oder auf eine andere Art und Weise angeordnet sind.

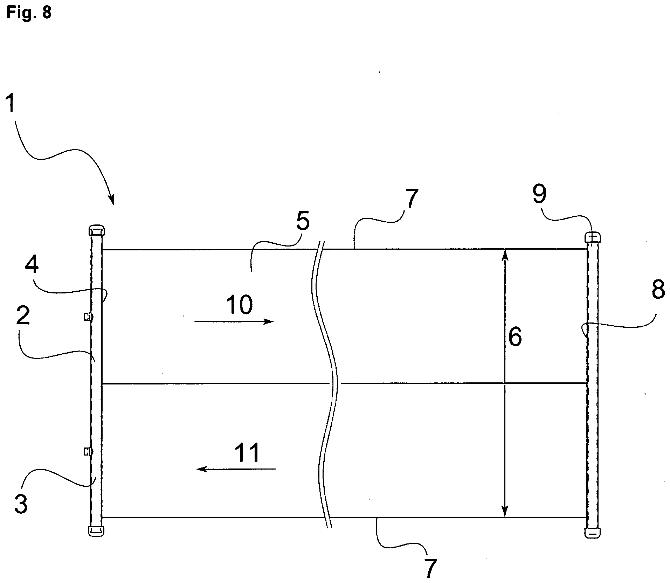

Fig. 8 zeigt eine Seitenansicht eines weiteren Ausführungsbeispiels eines nicht unter den Schutzumfang fallendes Wärmeübertragungselements 1. Hier sind der Verteiler 2 und der Sammler 3 axial fluchtend zueinander angeordnet. Der Vorteil an dieser Anordnung ist, dass der Wärmetransfer nach dem Gegenstromprinzip zwischen dem Verteiler 2 und dem Sammler 3 vermieden wird.

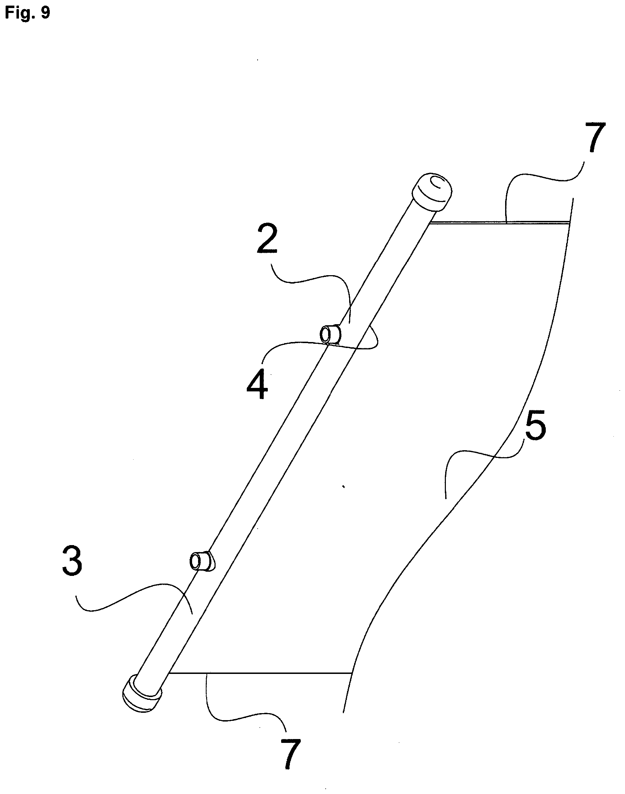

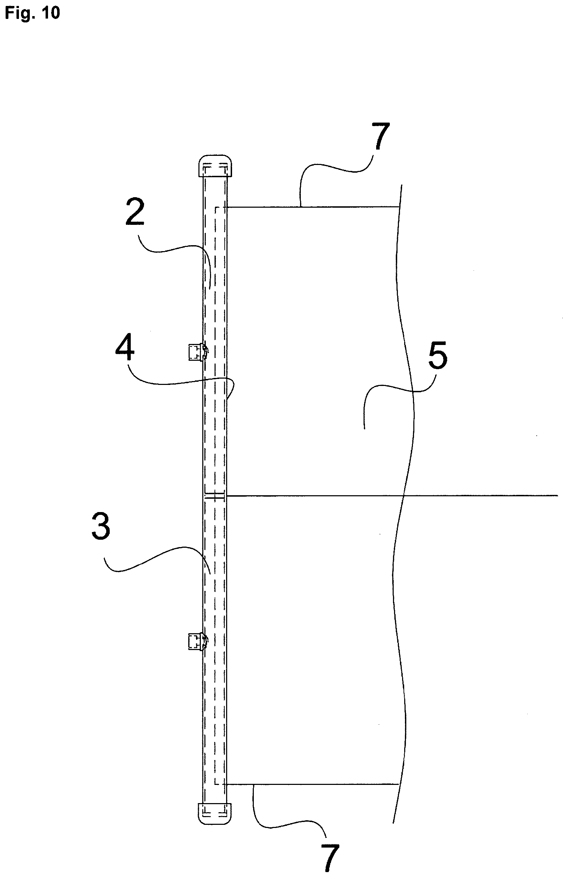

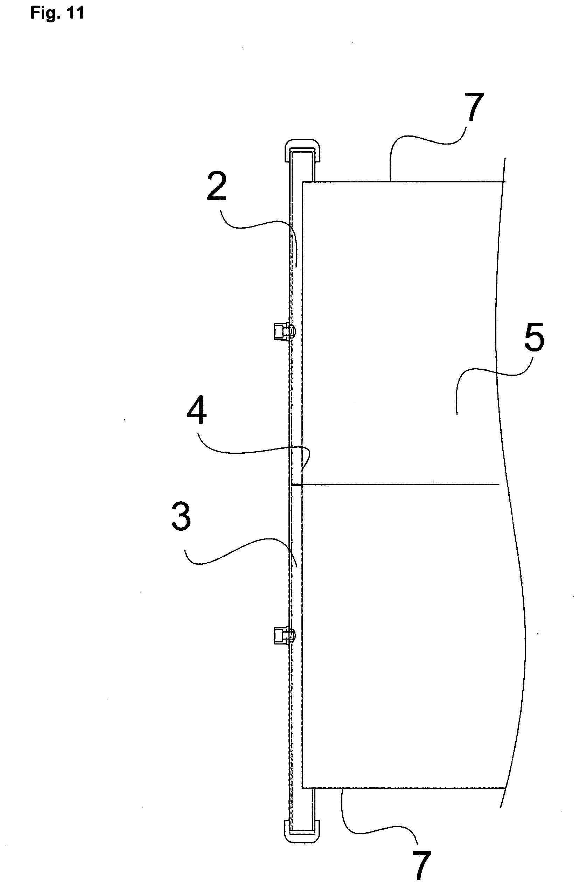

Fig. 9 bis Fig. 11 zeigen eine perspektivische Ansicht, eine Seitenansicht und eine Schnittansicht eines Ausschnittes des Wärmeübertragungselements 1, gemäß Fig. 8.

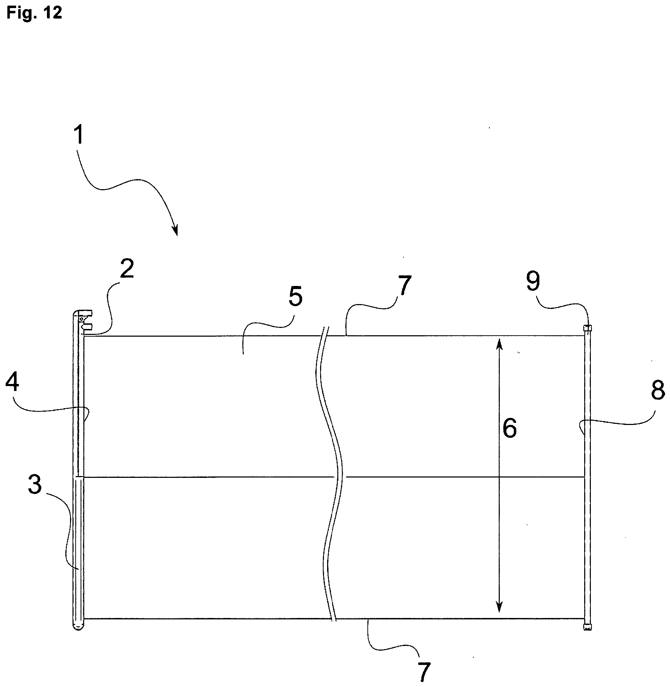

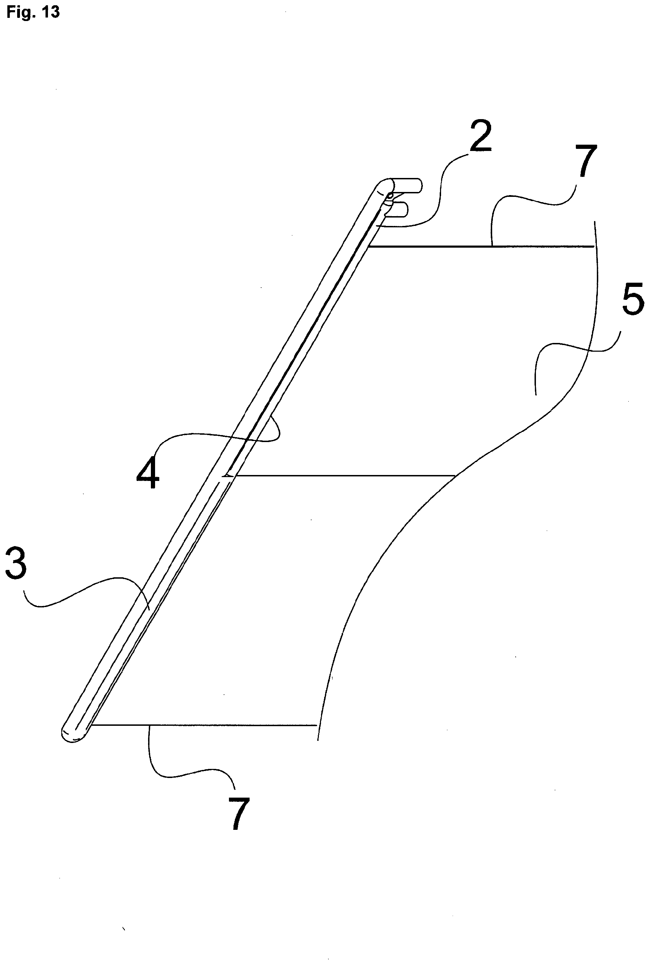

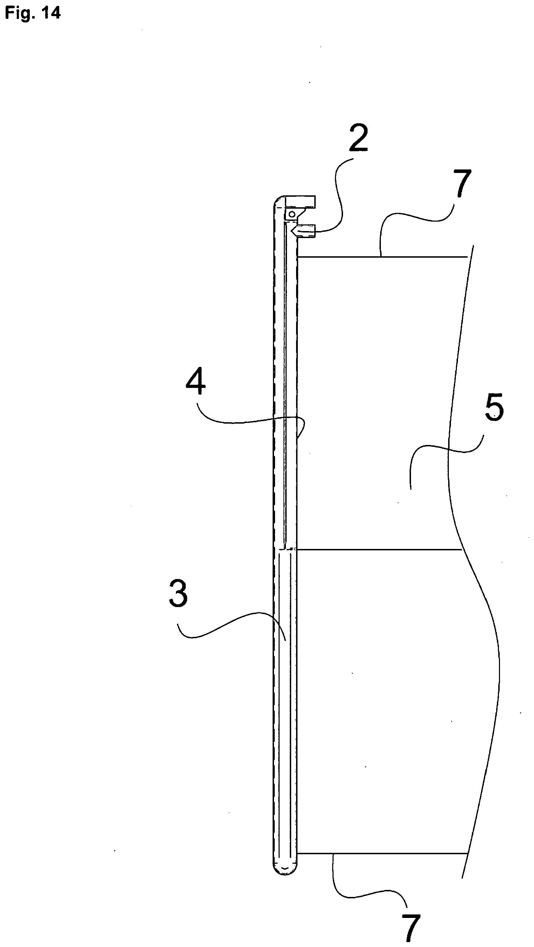

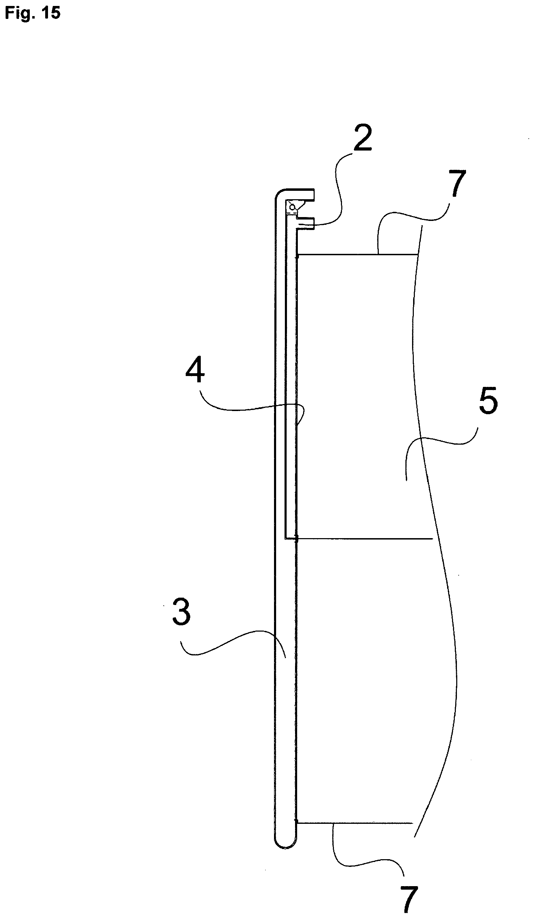

Fig. 12 bis Fig. 15 zeigen eine Seitenansicht, eine perspektivische Ansicht eines Ausschnittes, eine Seitenansicht eines Ausschnittes und eine Schnittansicht auf einen Ausschnitt eines weiteren Ausführungsbeispiels eines nicht unter den Schutzumfang fallendes Wärmeübertragungselements 1, bei dem die beiden Längsachsen des Verteilers 2 und des Sammlers 3 keine gemeinsame Längsachse bilden.

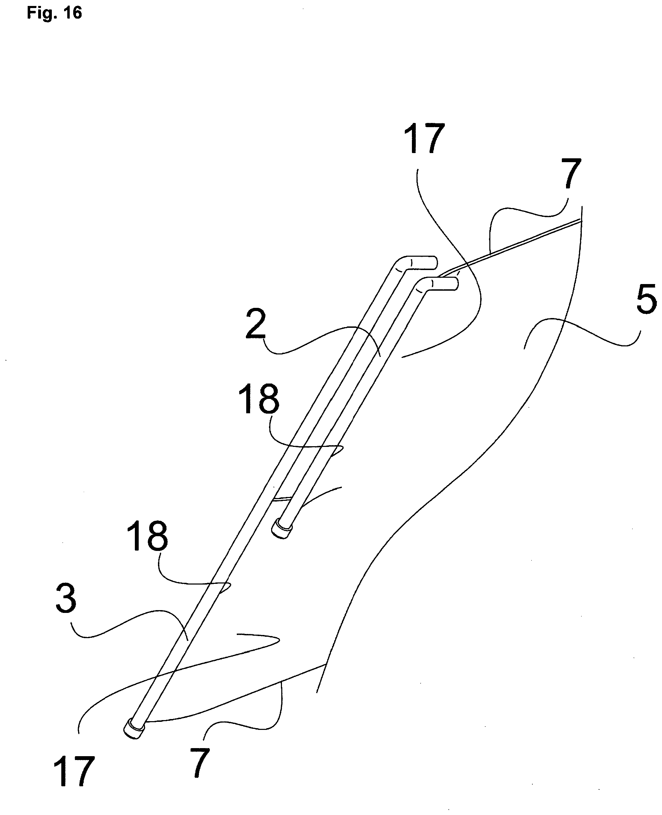

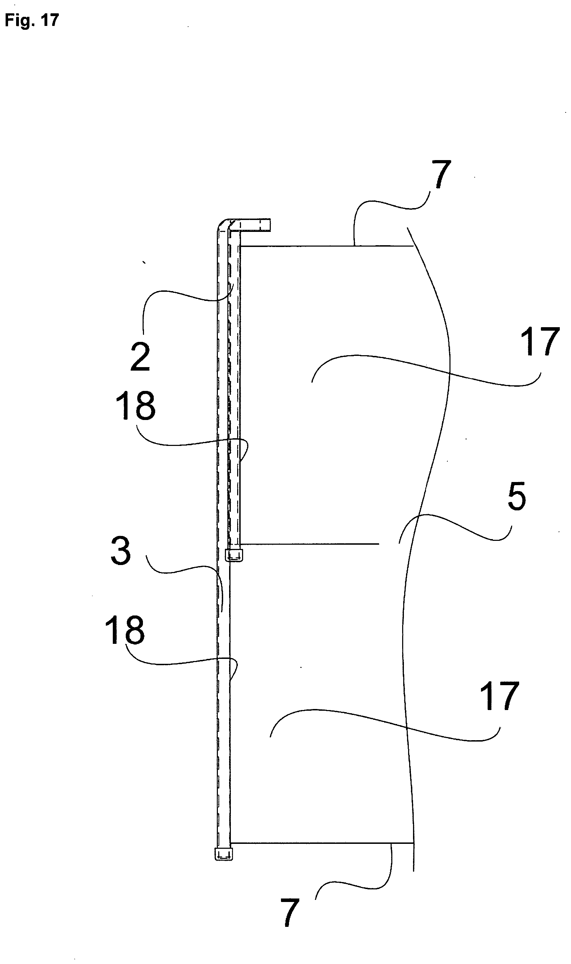

Fig. 16 und Fig. 17 zeigen eine perspektivische Ansicht und eine Seitenansicht eines Ausschnittes eines weiteren Ausführungsbeispiels eines nicht unter den Schutzumfang fallendes Wärmeübertragungselements 1. In diesem Ausführungsbeispiel ist die flexible Matte 5 teilweise in zwei Elemente 17 geteilt, so dass der Verteiler 2 an der Stirnseite 18 von einem Element 14 und der Sammler 3 an der Stirnseite 18 von dem zweiten Element 14 angeordnet sind. Dabei bilden die Stirnseiten 18 der beiden Elemente 14 die Stirnseite 4 der flexiblen Matte. Auf diese Weise ist die Strömungsrichtung des Wärmeträgermediums innerhalb eines Elements 17 die gleiche. Durch das Variieren des Abstandes zwischen den Elementen 17 kann man den unerwünschten Wärmetransfer zwischen den Elementen 17 minimieren. Dasselbe gilt für das Variieren des Abstandes zwischen dem Verteiler 2 und dem Sammler 3.

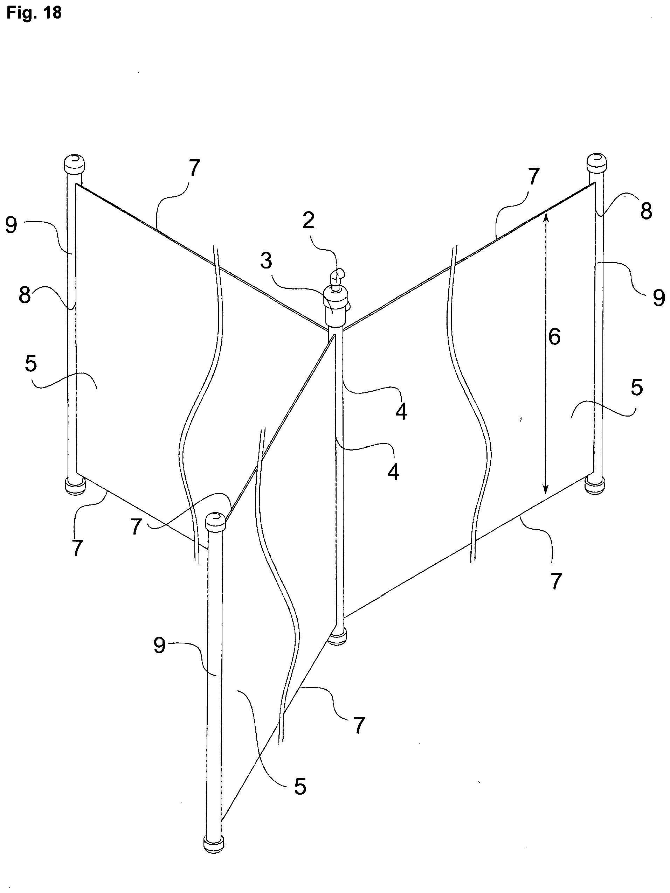

Fig. 18 zeigt eine perspektivische Ansicht auf ein weiteres Ausführungsbeispiel eines nicht unter den Schutzumfang fallendes Wärmeübertragungselements 1. In diesem Ausführungsbeispiel sind drei flexible Matten 5 an dem Verteiler 2 bzw. Sammler 3 angeordnet. Durch den möglichst großen Abstand der einzelnen Matten zueinander wird der Wärmetransfer zwischen den flexiblen Matten 5 minimiert und somit die Effizienz des Wärmeübertragungselements 1 gesteigert. Die flexiblen Matten 5 können auch beispielsweise gekrümmt werden, so dass verschiedene Anordnungen denkbar sind, die sich beispielsweise durch den zur Verfügung stehenden Platz bedingen.

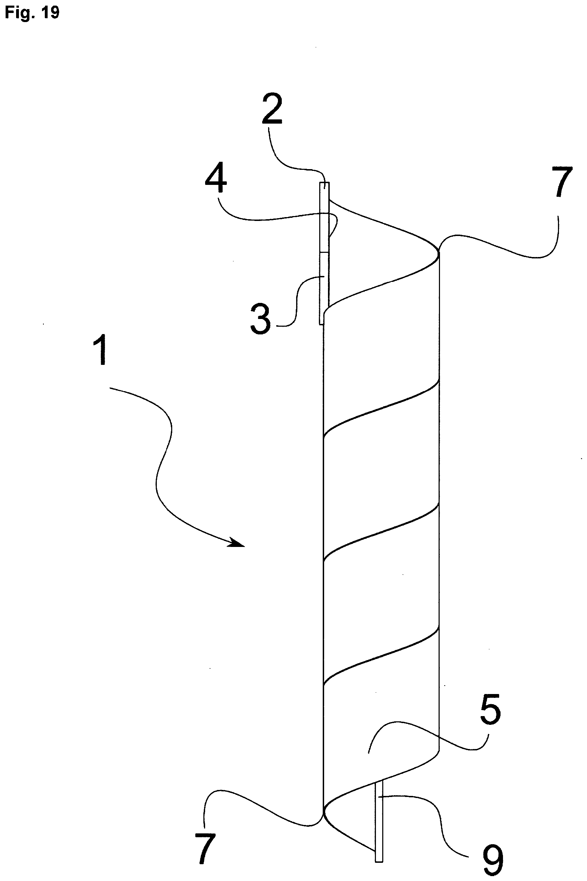

Fig. 19 zeigt eine Seitenansicht eines erfindungsgemäßen Wärmeübertragungselements 1. Hier ist die flexible Matte 5 in einer schraubenförmigen Anordnung ausgeführt. Auf diese Weise wird der flächenmäßige Platzbedarf für die Installation reduziert. Durch diese Anordnung wird sichergestellt, dass der Temperaturgradient zwischen der Oberfläche der flexiblem Matte und der Umgebung vergrößert wird, was die Effizienz des Wärmeübertragungselements 1 steigert. Des Weiteren ist für diese Anordnung notwendig den Winkel zwischen dem Verteiler 2 bzw. dem Sammler 3 und der Längsseite 7 der flexiblem Matte 5 der Art zu verändern, dass es aufgrund der Wicklungen zu keinen Spannungen im Wärmeübertragungselement 1 kommt.

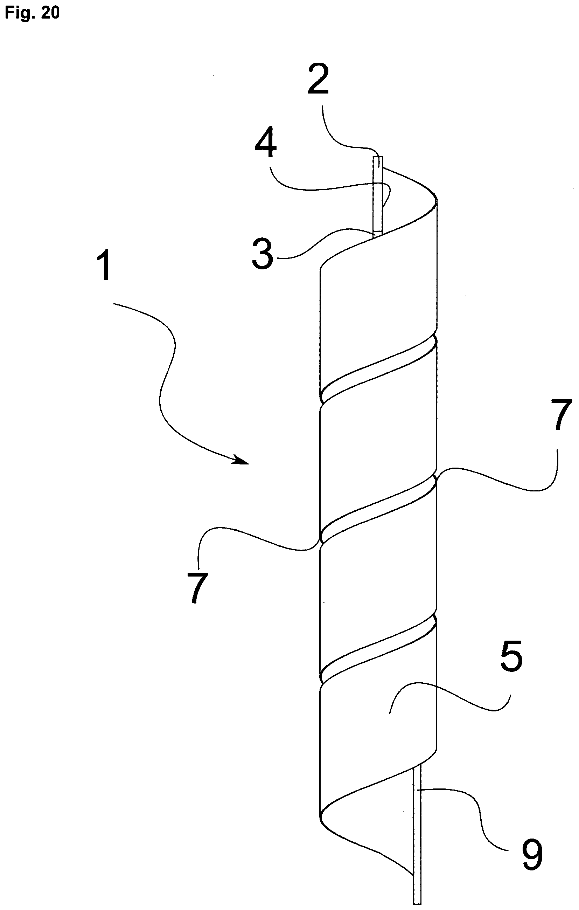

Fig. 20 zeigt eine Seitenansicht eines weiteren Ausführungsbeispiels eines erfindungsgemäßen Wärmeübertragungselements 1. Im Unterschied zu der in Fig. 19 beschriebenen Ausführung ist bei dieser Anordnung ein Abstand zwischen den einzelnen Wicklungen der flexiblen Matte 5. Dadurch wird der Wärmetransfer zwischen den einzelnen Wicklungen reduziert und somit die Effizienz des Wärmeübertragungselements 1 erhöht. Selbstverständlich ist neben einem vertikalen Einbau auch ein horizontaler Einbau des Wärmeübertragungselements möglich.

### Bezugszahlenliste

- 1: Wärmeübertragungselement
- 2: Verteiler
- 3: Sammler
- 4: Stirnseite
- 5: Flexible Matte
- 6: Breite
- 7: Längsseite
- 8: Stirnseite
- 9: Verbindungselement
- 10: Pfeil
- 11: Pfeil
- 12: Strömungskanal
- 13: innere Wandung
- 14: äußere Wandung
- 15: parallele Wandung
- 16: gekrümmte Wandung
- 17: Element
- 18: Stirnseite

## Patentansprüche

1. Wärmeübertragungselement (1), mit mindestens einer flexiblen Matte (5), an welcher mindestens ein Verteiler (2) und mindestens ein Sammler (3) angeordnet ist, wobei die flexible Matte (5) mindestens einen Strömungskanal (12), mindestens eine Stirnseite (4, 8), mindestens eine Längsseite (7) und mindestens eine Breite (6) aufweist, wobei mindestens ein Verteiler (2) und mindestens ein Sammler (3) an derselben Stirnseite (4) der flexiblen Matte (5) angeordnet sind,
**dadurch gekennzeichnet,**
**dass** mindestens eine Längsseite (7) an einem Verteiler (2) in einem spitzen Winkel zu mindestens einer Längsachse mindestens eines Verteilers (2) und/oder einem stumpfen Winkel zu mindestens einer Längsachse mindestens eines Verteilers (2) angeordnet ist
und/oder
**dass** mindestens eine Längsseite (7) an einem Sammler (3) in einem spitzen Winkel zu mindestens einer Längsachse mindestens eines Sammlers (3) und/oder in einem stumpfen Winkel zu mindestens einer Längsachse mindestens eines Sammlers (3) angeordnet ist.

2. Wärmeübertragungselement (1) nach Anspruch 1,
**dadurch gekennzeichnet,**
**dass** mindestens ein Verteiler (2) und mindestens ein Sammler (3) zumindest teilweise axial ineinander angeordnet sind.

3. Wärmeübertragungselement (1) nach Anspruch 1 oder Anspruch 2,
**dadurch gekennzeichnet,**
**dass** mindestens ein Verteiler (2) und mindestens ein Sammler (3) zumindest teilweise axial fluchtend zueinander und/oder zumindest teilweise parallel zueinander angeordnet sind.

4. Wärmeübertragungselement (1) nach einem der vorhergehenden Ansprüche,
**dadurch gekennzeichnet,**
**dass** die flexible Matte (5) mindestens zwei Stirnseiten (4, 8) aufweist, wobei mindestens eine Stirnseite (4) einen Versatz in Richtung der Breite (6) der flexiblen Matte (5) des Wärmeübertragungselements (1) zu mindestens einer anderen Stirnseite (8) aufweist.

5. Wärmeübertragungselement (1) nach einem der vorhergehenden Ansprüche,
**dadurch gekennzeichnet,**
**dass** die flexible Matte (5) zumindest teilweise in mindestens zwei Elemente (17) getrennt ist, wodurch die durch die Trennung gebildeten Stirnseiten (18) der Elemente (17) die Stirnseite (4) der flexiblen Matte (5), an der mindestens ein Sammler (3) und mindestens ein Verteiler (2) angeordnet sind, bilden.

6. Wärmeübertragungselement (1) nach einem der vorhergehenden Ansprüche,
**dadurch gekennzeichnet,**
**dass** mindestens ein Verteiler (2) und mindestens ein Sammler (3), mindestens zwei Verteiler (2) und/oder mindestens zwei Sammler (3) aus einem Bauteil sind.

7. Wärmeübertragungselement (1) nach einem der vorhergehenden Ansprüche,
**dadurch gekennzeichnet,**
**dass** an mindestens einem Verteiler (2) und/oder an mindestens einem Sammler (3) mindestens eine Haltevorrichtung angeordnet ist.

8. Wärmeübertragungselement (1) nach einem der vorhergehenden Ansprüche,
**dadurch gekennzeichnet,**
**dass** das Wärmeübertragungselement (1) zumindest teilweise aus einem druckbeständigen Material besteht.

9. Wärmeübertragungselement (1) nach einem der vorhergehenden Ansprüche,
**dadurch gekennzeichnet,**
**dass** mindestens ein Verteiler (2) und/oder mindestens ein Sammler (3) zumindest teilweise aus einem flexiblen Material ist.

10. Wärmeübertragungselement (1) nach einem der vorhergehenden Ansprüche,
**dadurch gekennzeichnet,**
**dass** das Wärmeübertragungselement (1) zumindest teilweise aus Kunststoff ist.

11. Wärmeübertragungselement (1) nach einem der vorhergehenden Ansprüche,
**dadurch gekennzeichnet,**
**dass** die flexible Matte (5) zumindest teilweise aus Kunststoff ist.

12. Wärmeübertragungselement (1) nach einem der vorhergehenden Ansprüche,
**dadurch gekennzeichnet,**
**dass** die flexible Matte (5) aus nebeneinander angeordneten Rohren gefertigt ist.

13. Wärmeübertragungselement (1) nach einem der vorhergehenden Ansprüche,
**dadurch gekennzeichnet,**
**dass** mindestens ein Strömungskanal (12) der flexiblen Matte (5) eine Kapillare ist.

## Claims

1. A heat transfer element (1) having at least one flexible mat (5) on which at least one distributor (2) and at least one collector (3) are arranged, said flexible mat (5) having at least one flow channel (12), at least one end face (4, 8), at least one longitudinal face (7), and at least one width (6), at least one distributor (2) and at least one collector (3) being arranged on the same end face (4) of the flexible mat (5),
**characterised in that**
at least one longitudinal face (7) is arranged on a distributor (2) at an acute angle with respect to at least one longitudinal axis of at least one distributor (2) and/or is arranged in an obtuse angle with respect to at least one longitudinal axis of at least one distributor (2)
and/or
**in that** at least one longitudinal face (7) is arranged on a collector (3) at an acute angle with respect to at least one longitudinal axis of at least one collector (3) and/or is arranged in an obtuse angle with respect to at least one longitudinal axis of at least one collector (3).

2. The heat transfer element (1) as claimed in claim 1,
**characterised in that**
at least one distributor (2) and at least one collector (3) are at least partially arranged one within the other.

3. The heat transfer element (1) as claimed in claim 1 or claim 2,
**characterised in that**
at least one distributor (2) and at least one collector (3) are arranged at least partially in axial alignment and/or at least partially parallel with respect to each other.

4. The heat transfer element (1) as claimed in any of the preceding claims,
**characterised in that**
the flexible mat (5) has at least two end faces (4, 8), with at least one end face (4) having an offset in the direction of the width (6) of the flexible mat (5) of the heat transfer element (1) with respect to at least one other end face (8).

5. The heat transfer element (1) as claimed in any of the preceding claims,
**characterised in that**
the flexible mat (5) is at least partly separated into at least two elements (17), whereby the end faces (18) of the elements (17) formed by said separation form the end face (4) of the flexible mat (5) on which at least one collector (3) and at least one distributor (2) are arranged.

6. The heat transfer element (1) as claimed in any of the preceding claims,
**characterised in that**
at least one distributor (2) and at least one collector (3), at least two distributors (2) and/or at least two collectors (3) are fabricated as a single component.

7. The heat transfer element (1) as claimed in any of the preceding claims,
**characterised in that**
at least one distributor (2) and/or at least one collector (3) has/have at least one retaining device arranged thereon.

8. The heat transfer element (1) as claimed in any of the preceding claims,
**characterised in that**
the heat transfer element (1) consists at least partially of a pressure-resistant material.

9. The heat transfer element (1) as claimed in any of the preceding claims,
**characterised in that**
at least one distributor (2) and/or at least one collector (3) is/are at least partially made of a flexible material.

10. The heat transfer element (1) as claimed in any of the preceding claims,
**characterised in that**
the heat transfer element (1) is at least partially made of plastic material.

11. The heat transfer element (1) as claimed in any of the preceding claims,
**characterised in that**
the flexible mat (5) is at least partially made of plastic material.

12. The heat transfer element (1) as claimed in any of the preceding claims,
**characterised in that**
the flexible mat (5) is made of tubes arranged side by side.

13. The heat transfer element (1) as claimed in any of the preceding claims,
**characterised in that**
at least one flow channel (12) of the flexible mat (5) is a capillary.

## Revendications

1. Élément de transfert de chaleur (1) pourvu d'au moins une natte flexible (5) sur laquelle sont disposés au moins un répartiteur (2) et au moins un collecteur (3), la natte flexible (5) présentant au moins un canal d'écoulement (12), au moins une face frontale (4, 8), au moins une face longitudinale (7) et au moins une largeur (6), au moins un répartiteur (2) et au moins un collecteur (3) étant disposés sur la même face frontale (4) de la natte flexible (5),
**caractérisé en ce que**
au moins une face longitudinale (7) est disposée sur un répartiteur (2) selon un angle aigu par rapport à au moins un axe longitudinal d'au moins un répartiteur (2) et/ou selon un angle obtus par rapport à au moins un axe longitudinal d'au moins un répartiteur (2) et/ou
au moins une face longitudinale (7) est disposée sur un collecteur (3) selon un angle aigu par rapport à au moins un axe longitudinal d'au moins un collecteur (3) et/ou selon un angle obtus par rapport à au moins un axe longitudinal d'au moins un collecteur (3).

2. Élément de transfert de chaleur (1) selon la revendication 1,
**caractérisé en ce que**
au moins un répartiteur (2) et au moins un collecteur (3) sont disposés au moins en partie axialement l'un dans l'autre.

3. Élément de transfert de chaleur (1) selon la revendication 1 ou selon la revendication 2,
**caractérisé en ce que**
au moins un répartiteur (2) et au moins un collecteur (3) sont disposés l'un par rapport à l'autre au moins en partie selon un alignement axial et/ou sont disposés au moins en partie parallèlement l'un à l'autre.

4. Élément de transfert de chaleur (1) selon l'une quelconque des revendications précédentes,
**caractérisé en ce que**
la natte flexible (5) présente au moins deux faces frontales (4, 8), au moins une face frontale (4) présentant par rapport à au moins une autre face frontale (8) un décalage en direction de la largeur (6) de la natte flexible (5) de l'élément de transfert de chaleur (1).

5. Élément de transfert de chaleur (1) selon l'une quelconque des revendications précédentes,
**caractérisé en ce que**
la natte flexible (5) est séparée au moins en partie en au moins deux éléments (17), les faces frontales (18) des éléments obtenues grâce à la séparation formant ainsi la face frontale (4) de la natte flexible (5) sur laquelle sont disposés au moins un collecteur (3) et au moins un répartiteur (2).

6. Élément de transfert de chaleur (1) selon l'une quelconque des revendications précédentes,
**caractérisé en ce que**
au moins un répartiteur (2) et au moins un collecteur (3), au moins deux répartiteurs (2) et/ou au moins deux collecteurs (3) sont réalisés en une seule pièce.

7. Élément de transfert de chaleur (1) selon l'une quelconque des revendications précédentes,
**caractérisé en ce que**
au moins un dispositif de retenue est disposé sur au moins un répartiteur (2) et/ou sur au moins un collecteur (3).

8. Élément de transfert de chaleur (1) selon l'une quelconque des revendications précédentes,
**caractérisé en ce que**
ledit élément de transfert de chaleur (1) est constitué au moins en partie en un matériau résistant à la pression.

9. Élément de transfert de chaleur (1) selon l'une quelconque des revendications précédentes,
**caractérisé en ce que**
au moins un répartiteur (2) et/ou au moins un collecteur (3) est/sont réalisé(s) au moins en partie en un matériau flexible.

10. Élément de transfert de chaleur (1) selon l'une quelconque des revendications précédentes,
**caractérisé en ce que**
ledit élément de transfert de chaleur (1) est au moins en partie en matière plastique.

11. Élément de transfert de chaleur (1) selon l'une quelconque des revendications précédentes,
**caractérisé en ce que**
la natte flexible (5) est au moins en partie en matière plastique.

12. Élément de transfert de chaleur (1) selon l'une quelconque des revendications précédentes,
**caractérisé en ce que**
la natte flexible (5) est constituée de tubes disposés les uns à côté des autres.

13. Élément de transfert de chaleur (1) selon l'une quelconque des revendications précédentes,
**caractérisé en ce que**
au moins un canal d'écoulement (12) de la natte flexible (5) est un capillaire.
